# EUROPÄISCHE PATENTANMELDUNG

(11) **EP 4 400 254 A1**
(43) Veröffentlichungstag der Anmeldung: **17.07.2024**
(21) Anmeldenummer: 23151120.5
(22) Anmeldetag: 11.01.2023
(51) Int. Cl.: B23P 15/00, B25D 1/00, F16H 57/04, B22F 5/02, B23B 45/00, B25B 21/00, B27B 9/00, F28F 3/04, B21C 23/10, B29C 45/14

(54) **GETRIEBEANORDNUNG MIT EINEM WÄRMEABLEITENDEN GETRIEBEGEHÄUSE**

(71) Anmelder: Hilti Aktiengesellschaft, 9494 Schaan (LI)
(72) Erfinder: Mucha, Steffen, 86930 Schwabmünchen (DE); Mandel, Ulrich, 86807 Buchloe Honsolgen (DE); Matyssek, Jacob, 85635 Höhenkirchen-Siegertsbrunn (DE)
(74) Vertreter: Hilti Aktiengesellschaft Corporate Intellectual Property

(57) **Zusammenfassung**

Die Erfindung betrifft eine Getriebeanordnung mit einem Getriebegehäuse (5) zur Unterbringung von Getriebemitteln eines Elektrohandwerkzeugs, wobei das Getriebegehäuse (5) zumindest getriebeeingangsseitig und/oder getriebeausgangsseitig mindestens einen Lagersitzabschnitt (6a; 6b) zur Aufnahme mindestens eines Wälzlagers (13) aufweist, wobei der Lagersitzabschnitt (6a; 6b) des Getriebegehäuses (5) als ein extrudierter Metallring (7) mit nach radial außen gerichtet angeformten Kühlrippen (8) ausgebildet ist, wohingegen die verbleibenden Gehäuseabschnitte (9) aus einem Kunststoffmaterial hergestellt sind.

## Beschreibung

Die vorliegende Erfindung betrifft eine Getriebeanordnung mit einem Getriebegehäuse zur Unterbringung von Getriebemitteln eines Elektrohandwerkzeugs, wobei das Gehäuse zumindest getriebeeingangsseitig und/oder getriebeausgangsseitig mindestens einen Lagersitzabschnitt zur Aufnahme mindestens eines Wälzlagers aufweist. Die Erfindung betrifft außerdem ein Elektrohandwerkzeug, vorzugsweise einen Bohr- oder Meißelhammer, umfassend eine solche Getriebeanordnung.

Das Einsatzgebiet der Erfindung erstreckt sich vornehmlich auf Elektrohandwerkzeuge. Diese bestehen im Wesentlichen aus einem Maschinengehäuse zur Aufnahme einer elektromotorischen Antriebseinheit, deren Antriebsenergie über Getriebemittel - beispielsweise Stirnradgetriebe, Pleuelanordnungen, Schlagwerke - an eine aus dem Maschinengehäuse austretende Werkzeugaufnahmeeinheit zur lösbaren Befestigung eines Werkzeugs - beispielsweise eines Bohrers, Schlagbohrers oder Meißels - geleitet wird. Gewöhnlich ist außen am Maschinengehäuse mindestens ein Handgriff zur manuellen Bedienung angeordnet oder direkt angeformt. Ein innenliegend des Maschinengehäuses angeordnetes Getriebegehäuse der hier interessierenden Art ist mit zumindest einem Gleit- oder Wälzlager zur drehbaren Lagerung von An- oder Abtriebswellen ausgestattet, welches in einem zugeordneten getriebegehäuseseitigen Lagersitzabschnitt montiert ist.

Ein solches Lager und andere Getriebemittel verursachen aufgrund der Bewegungsreibung Wärme, welche über das Getriebegehäuse nach außen abzuführen ist.

### Stand der Technik

Aus dem allgemein bekannten Stand der Technik gehen Getriebegehäuse der hier interessierenden Art hervor, welche aus einem Leichtmetallmaterial zur Wärmeabführung nach außen bestehen. Ist ein solches Getriebegehäuse allerdings von einem weiteren Maschinengehäuse umschlossen, das gewöhnlich aus einem Kunststoff besteht, so beeinträchtigt dies die Wärmeabfuhr. Abhilfe schafft gewöhnlich eine zusätzliche aktive Kühlung per Kühlluftstrom.

Daneben sind auch Getriebegehäuse aus Kunststoff allgemein bekannt, welche jedoch materialbedingt eine relativ schlechtere Wärmeableitung ermöglichen. Außerdem weisen aus Kunststoff bestehende Lagersitzabschnitte zur Aufnahme von Wälzlagern nur eine beschränkte Stabilität auf. Daher eignen sich derartige Getriebegehäuse aus Kunststoff lediglich für geringere Leistungsklassen.

Aus der CN 204114085 U geht ein Getriebegehäuse zur Unterbringung von Getriebemitteln hervor, welche eine Stirnradstufe aufnimmt. Während die Getriebeeingangswelle per Gleitlager am Getriebegehäuse gelagert ist, ist die Abtriebswelle über zwei axial beabstandet zueinander im Getriebegehäuse untergebrachte Wälzlager drehgelagert. Zur Wärmeabfuhr der durch die Getriebemittel verursachten Reibungswärme befinden sich außen am Getriebegehäuse zusätzliche Kühlkörper mit Kühlrippen. Allerdings kann die Wärmeabfuhr hier nur über das Getriebegehäuse als Wärmeleiter stattfinden.

Es ist die Aufgabe der vorliegenden Erfindung eine gattungsgemäße Getriebeanordnung mit einem Getriebegehäuse und hierin eingesetzten Wälzlagern dahingehend weiter zu verbessern, dass dieses weitestgehend aus einem Kunststoff bestehend ohne Beeinträchtigung der Stabilität eine hinreichende Wärmeableitung nach außen gewährleistet.

### Kurzbeschreibung der Erfindung

Die Aufgabe wird ausgehend von einer Getriebeanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Der nebengeordnete Anspruch 10 ist auf ein Elektrohandwerkzeug mit einer solchen Getriebeanordnung gerichtet.

Die Erfindung schließt die technische Lehre ein, dass der mindestens eine Lagersitzabschnitt des Gehäuses zur Aufnahme mindestens eines Gleit- oder Wälzlagers als ein extrudierter Metallring mit nach radial außen gerichteten und hieran direkt angeformten Kühlrippen ausgebildet ist, wohingegen die verbleibenden Gehäuseabschnitte des Getriebegehäuses aus einem Kunststoffmaterial hergestellt sind.

Ein solches erfindungsgemäßes Hybrid-Gehäuse vereint den Vorteil einer unmittelbaren lokalen Wärmeabführung über Metallbestandteile mit dem Vorteil eines weitestgehenden Einsatzes von Kunststoffmaterial. Hierdurch wird die Voraussetzung dafür geschaffen, dass sich das erfindungsgemäße Getriebegehäuse in fertigungstechnisch einfacher Weise per Spritzgießen des Kunststoffmaterials herstellen lässt, wobei je nach den innenliegend zu montierenden Getriebemitteln mindestens ein Metallring als Lagersitz als Einlegeteil zum Anspritzen des Kunststoffmaterials verwendet wird.

Vorzugsweise ist insoweit der mindestens eine Metallring stoffschlüssig mit dem Kunststoffmaterial des mindestens einen verbleibenden Gehäuseabschnitts verbunden, wobei auch der Metallring in Funktionsintegration einen Teil des Getriebegehäuses bildet.

Während also der Metallring primär als Kühlkörper des Getriebegehäuses dient, dienen die dazwischenliegenden Gehäuseabschnitte aus Kunststoff primär zur Aufnahme der Gehäusebelastungen. Die außen am Metallring angeformten Kühlrippen vergrößern dabei die Kühlfläche und reduzieren gleichzeitig ein Aufheizen des Kunststoffmaterials der übrigen Gehäuseabschnitte des Hybrid-Gehäuses, so dass dessen Stabilität von einem überlastenden Wärmeeintrag unbeeinträchtigt bleibt.

Gemäß einer die Erfindung verbessernden Maßnahme wird vorgeschlagen, dass sich das Kunststoffmaterial des Hybrid-Gehäuses auch teilweise über zumindest die Außenfläche des Metallrings hinweg erstreckt, so dass vorzugsweise eine zusätzliche formschlüssige Verbindung zwischen Metallring und Gehäuseabschnitt aus Kunststoff geschaffen wird. Hierzu können beispielsweise einige der Kühlrippen weggelassen werden, um Platz für eine derartige Kunststoffeinfassung oder Kunststoffumfassung zu schaffen.

Gemäß einer weiteren die Erfindung verbessernden Maßnahme wird vorgeschlagen, dass innenwandseitig des Metallrings eine Plasmaschicht - beispielsweise aus Titanoxid - zur Erhöhung der Haltekraft gegenüber einem hierin eingepressten Wälzlager aufgebracht ist. Hierdurch wird die Adhäsion zwischen dem Metallmaterial des Metallrings und dem Kunststoffmaterial, beispielsweise dem Polyamidmaterial PA6GF30 oder ähnlichem, derart erhöht, dass eine Relativbewegung zwischen dem Metallring und dem Außenring eines Wälzlagers verhindert wird.

Gemäß einer anderen die Erfindung verbessernden Maßnahme wird vorgeschlagen, dass der Metallring mit Gewindebolzen oder Gewindebohrungen versehen ist, woran Anbauteile, beispielsweise ein Flanschring oder dergleichen für die Einfassung eines Wellendichtrings, lösbar angebracht werden können. Die Gewindebolzen oder Gewindebohrungen können dafür beispielsweise äquidistant zueinander beabstandet entlang des stirnseitigen Umfangs des Metallrings angeordnet werden.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung des Getriebestrangs eines Elektrohandwerkzeugs mit eine Getriebeeinheit zur Übertragung der Antriebsleistung,
- Fig. 2: eine perspektivische Ansicht eines erfindungsgemäßen Hybrid-Gehäuses aus Aluminium und Kunststoff,
- Fig. 3: eine perspektivisch schematische Ansicht eines erfindungsgemäßen Getriebegehäuses, abgeleitet aus Fig. 2,
- Fig. 3a: einen Längsschnitt A-A aus Fig. 3, und
- Fig. 3b: einen Querschnitt B-B aus Fig. 3.

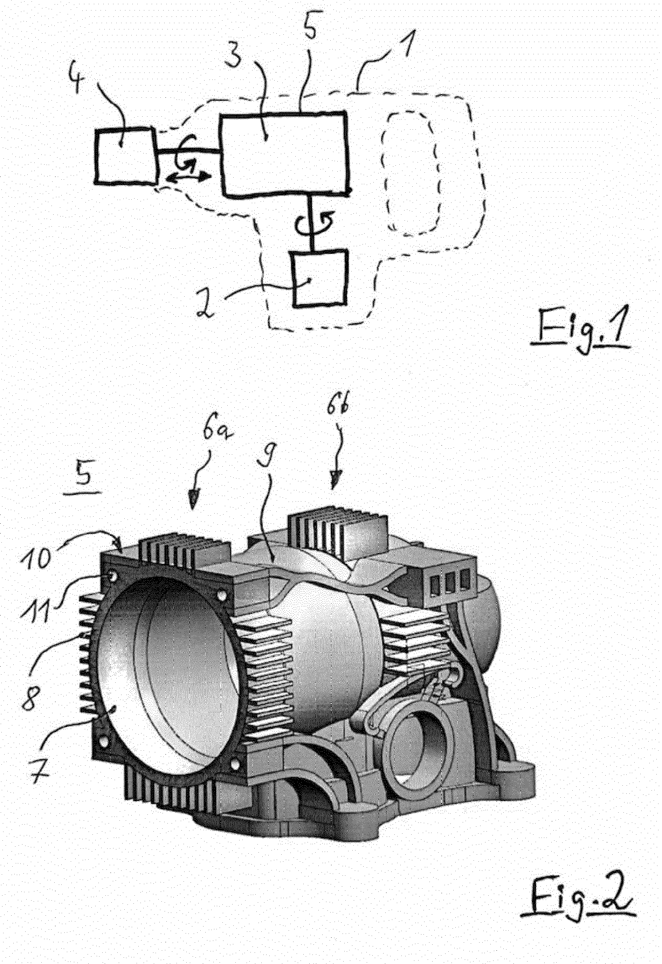

Gemäß Fig. 1 umfasst ein Elektrohandwerkzeug eine innerhalb eines Maschinengehäuses 1 untergebrachte elektromotorische Antriebseinheit 2, deren rotatorische Antriebsbewegung über eine Getriebeeinheit 3 in eine übersetzte Antriebsbewegung einer Werkzeugaufnahmeeinheit 4 umgesetzt wird. Dabei umfasst die Getriebeeinheit 3 ein eigenes innerhalb des Maschinengehäuses 1 untergebrachtes Getriebegehäuse 5.

Gemäß Fig. 2 ist das Getriebegehäuse 5 als Hybrid-Gehäuse ausgebildet und umfasst getriebeausgangsseitig zwei axial beabstandet zueinander angeordnete Lagersitzabschnitte 6a und 6b. Beide Lagersitzabschnitte 6a und 6b dienen der Aufnahme eines - hier nicht weiter dargestellten - Wälzlagers einer Getriebeausgangswelle, an der die - hier ebenfalls nicht dargestellte - Werkzeugaufnahmeeinheit 4 angeschlossen ist. Die innenliegenden Getriebemittel können neben der Erzeugung einer Drehbewegung für die Werkzeugaufnahmeeinheit auch mittels innenliegenden Schlagmitteln eine überlagerte Hin- und Her-Bewegung zur Beaufschlagung eines Schlagbohrers erzeugen.

Während die Lagersitzabschnitte 6a und 6b des Getriebegehäuses 5 als ein extrudierter Metallring 7 mit nach radial außen hiervon abstehenden Kühlrippen 8 ausgebildet ist, sind die verbleibenden - also dazwischenliegenden - Gehäuseabschnitte 9 aus einem Kunststoffmaterial gefertigt.

Im Rahmen dieses Hybrid-Gehäuses sind die Metallringe 7 jeweils stoffschlüssig mit dem Kunststoffmaterial des verbleibenden Gehäuseabschnitts 9 verbunden, insbesondere angespritzt. Dabei erstreckt sich das Kunststoffmaterial des Gehäuseabschnitts 9 im Verbindungsbereich 10 (exemplarisch) teilweise auch über die Außenfläche des Metallrings 7 hinweg. Die geometrische Ausbildung erfolgt derart, dass sich zusätzlich eine formschlüssige Verbindung zwischen Metallring 7 und Gehäuseabschnitt 9 ergibt, was hier insbesondere hinsichtlich des zweiten Lagersitzabschnitts 6b umgesetzt ist, bei dem das Kunststoffmaterial des Gehäuseabschnitts 9 über die Außenfläche des dortigen Metallrings 7 hinweg verläuft.

Zur Anbringung weiterer - hier nicht dargestellter - Anbauteile weist der Metallring 7 stirnflächenseitig mehrere Gewindebohrungen 11 (exemplarisch) auf.

Der Metallring 7 mit den Kühlrippen 8 ist durch Ablängen von einem Strangpressprofil aus Aluminium gefertigt und ist zur Herstellung des Getriebegehäuses 5 als Einlegeteil für eine Spritzgießfertigung des im Übrigen aus dem Kunststoffmaterial bestehenden Getriebegehäuses 5 vorgesehen.

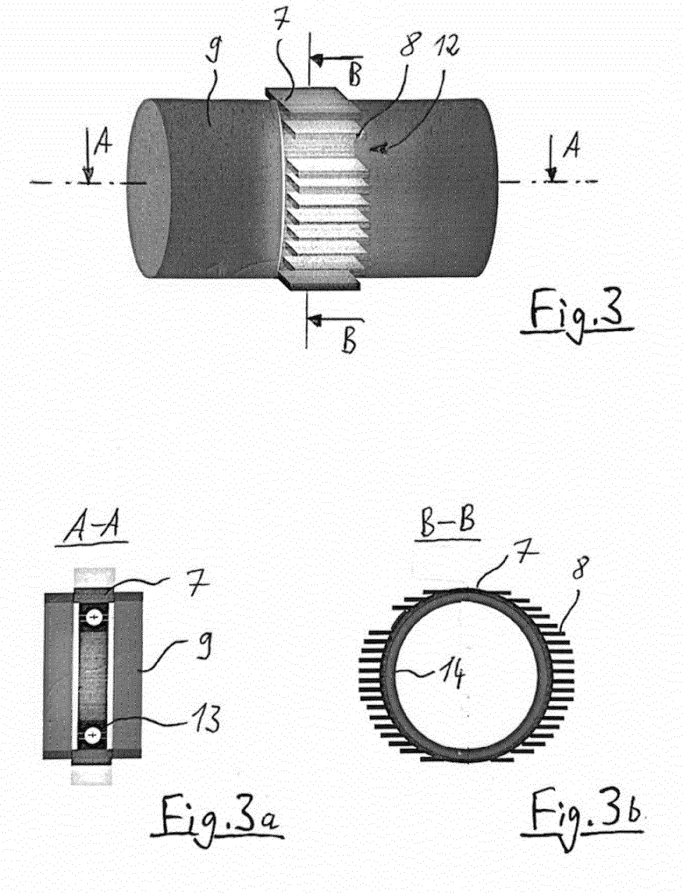

Gemäß Fig. 3 ist das Kunststoffmaterial des aus Kunststoff bestehenden Gehäuseabschnitts 9 über eine Freistelle 12 des Metallrings 7, an dem eine Kühlrippe 8 fehlt, hinweggeführt, um eine stabile Bauteilverbindung zwischen dem aus Kunststoff bestehenden Gehäuseabschnitt 9 und dem Metallring 7 zu schaffen.

Nach Fig. 3a dient der Metallring 7 bei diesem Ausführungsbeispiel der Aufnahme eines als Kugellager ausgebildeten Wälzlagers 13, das in den Innendurchmesser des Metallrings 7 eingepresst ist, wobei zur Erhöhung der Bauteilverbindung innenwandseitig des Metallrings 7 eine Plasmaschicht 14 aufgebracht ist.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, mehr oder weniger mit erfindungsgegenständlichen extrudierten Metallringen ausgebildete Lagersitzabschnitte im Rahmen eines Hybrid-Gehäuses einzusetzen. Lage und Anordnung der Metallringe richten sich dabei nach der Ausgestaltung der im Getriebegehäuse unterzubringenden Lagersitze.

### Bezugszeichenliste

- 1: Maschinengehäuse
- 2: Antriebseinheit
- 3: Getriebeeinheit
- 4: Werkzeugaufnahmeeinheit
- 5: Getriebegehäuse
- 6: Lagersitzabschnitt
- 7: Metallring
- 8: Kühlrippen
- 9: Gehäuseabschnitt
- 10: Verbindungsbereich
- 11: Gewindebohrung
- 12: Freistelle
- 13: Wälzlager
- 14: Plasmaschicht

## Patentansprüche

1. Getriebeanordnung mit einem Getriebegehäuse (5) zur Unterbringung von Getriebemitteln eines Elektrohandwerkzeugs, wobei das Getriebegehäuse (5) zumindest getriebeeingangsseitig und/oder getriebeausgangsseitig mindestens einen Lagersitzabschnitt (6a; 6b) zur Aufnahme mindestens eines Wälzlagers (13) aufweist, **dadurch gekennzeichnet, dass** der Lagersitzabschnitt (6a; 6b) des Getriebegehäuses (5) als ein extrudierter Metallring (7) mit nach radial außen gerichtet angeformten Kühlrippen (8) ausgebildet ist, wohingegen die verbleibenden Gehäuseabschnitte (9) aus einem Kunststoffmaterial hergestellt sind.

2. Getriebeanordnung nach Anspruch 1,
**dadurch gekennzeichnet, dass** der Metallring (7) stoffschlüssig mit dem Kunststoffmaterial des mindestens einen verbleibenden Gehäuseabschnitts (9) verbunden ist.

3. Getriebeanordnung nach Anspruch 2,
**dadurch gekennzeichnet, dass** sich das Kunststoffmaterial in Verbindungsbereichen (10) teilweise über zumindest die Außenfläche des Metallrings (7) erstreckt.

4. Getriebeanordnung nach Anspruch 3,
**dadurch gekennzeichnet, dass** sich das Kunststoffmaterial derart über die Außenfläche des Metallrings (7) erstreckt, dass eine zusätzlich formschlüssige Verbindung zwischen Metallring (7) und Gehäuseabschnitt (9) gebildet ist.

5. Getriebeanordnung nach einem der vorstehenden Ansprüche,
**dadurch gekennzeichnet, dass** innenwandseitig des Metallrings (7) eine Plasmaschicht (14) zur Erhöhung der Haltekraft gegenüber einem hierin eingepressten Wälzlager (13) aufgebracht ist.

6. Getriebeanordnung nach einem der vorstehenden Ansprüche,
**dadurch gekennzeichnet, dass** der Metallring (7) als Einlegeteil für eine Spritzgießfertigung des aus einem Kunststoffmaterial bestehenden Getriebegehäuses (5) ausgebildet ist.

7. Getriebeanordnung nach einem der vorstehenden Ansprüche,
**dadurch gekennzeichnet, dass** der Metallring (7) mit Gewindebolzen oder Gewindebohrungen (11) zur lösbaren Anbringung von Anbauteilen versehen ist.

8. Getriebeanordnung nach einem der vorstehenden Ansprüche,
**dadurch gekennzeichnet, dass** der Metallring (7) durch Ablängen eines extrudierte Strangpressprofils hergestellt ist.

9. Getriebeanordnung nach einem der vorstehenden Ansprüche,
**dadurch gekennzeichnet, dass** der extrudierte Metallring (7) aus Aluminium oder einer Aluminiumlegierung besteht.

10. Elektrohandwerkzeug, vorzugsweise Bohr- oder Meißelhammer, umfassend eine Getriebeanordnung nach einem der vorstehenden Ansprüche.
